Europäisches Patentamt

European Patent Office

Office européen des brevets

(11) Publication number: **0 323 684**
**A1**

## EUROPEAN PATENT APPLICATION

(21) Application number: **88300066.3**

(22) Date of filing: **06.01.88**

(51) Int. Cl.⁴: **G11B 7/24**

(43) Date of publication of application:
**12.07.89 Bulletin 89/28**

(84) Designated Contracting States:
**DE FR GB NL**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Nakamura, Naomasa c/o Patent**
**Division**
**Toshiba Corporation Principal Office**
**1-1 Shibaura 1-chome Minato-ku Tokyo(JP)**

(74) Representative: **BATCHELLOR, KIRK & EYLES**
**2 Pear Tree Court Farringdon Road**
**London EC1R 0DS(GB)**

(54) **Optical memory.**

(57) An optical memory for optically storing, retrieving and erasing information comprises a substrate and a recording layer. The recording layer undergoes a phase transition between equilibrium phase structure and non-equilibrium phase structure when exposed to light. The recording layer contains a MSb alloy, where M is at least one element selected from the group consisting of Cu, Ag, Ge, Bi, Zn, Cd, Sn, Pb, and As.

Fig 1

## OPTICAL MEMORY

### BACKGROUND OF THE INVENTION

The present invention relates to an optical memory in which information may be stored, retrieved and erased by exposure to light. More specifically, the invention relates to an optical recording disc having a recording layer with optical properties which change when the layer is irradiated with a laser.

Optical discs having a layer or film of semiconductor materials are widely used in industrial and consumer recording systems such as video recorders, digital audio recorders and document digital recorders. A signal is recorded on the optical disc by irradiation with a laser beam to form bits of information in the layer of semiconductor materials. The optical disc permits direct reading after the information has been written and random access to the recorded information. Optical discs may also be used for erasable recording.

Generally, layers of semiconductor material, such as Se, Ge, Te and InSb, are known to be able to assume two states, an equilibrium phase and a non-equilibrium phase, such as a crystalline phase and an amorphous phase. The concept of an optical disc based on the crystalline - to - amorphous phase transition of the semiconductor materials mentioned above is disclosed by S.R. Ovshinsky et al, "Reversible Structural Transformations In Amorphous semiconductors for Memory and Logic", METALLURGICAL TRANS. 2, pp. 641-45 (1971). These semiconductor materials, however, are chemically unstable and are gradually corroded by air when made into a thin film. Therefore, in practice, they are not used as the recording layer of an optical disc.

Another example of an optical memory is reported by N. Koshino et al, "Selenium Alloy Film for New Erasable Optical Disk Media" SPIE Vol. 529 Optical Mass Data Storage ( 1985 ) pp. 40-45. This optical memory is based on the crystalline-to-crystalline phase transition of a Se-In-Sb film. A recording layer comprising Se-In-Sb is formed as a deposition layer by the co-deposition or co-sputtering of Se, In and Sb. It is very difficult, however, to control the quality of In in the recording layer produced by these methods since In is relatively easily oxidized.

### SUMMARY OF THE INVENTION

Accordingly, it is an object of the present invention to provide an improved optical memory wherein data may be optically stored, retrieved and erased.

It is a further object of the present invention to provide a simple film-forming process for producing the optical memory described above.

It is still a further object of the present invention to provide an optical memory which has excellent durability and corrosion resistance and is capable of stable data storage over a long time period.

In accordance with the present Invention, the foregoing objects, and others, are achieved by providing an optical memory having a substrate and a recording layer supported on the substrate. The recording layer is formed of an MSb alloy, M representing at least one element selected from the group consisting of Cu, Ag, Ge, Bi, Zn, Cd, Sn, Pb and As.

In accordance with another embodiment of the present invention, the above-stated objects are achieved by providing another optical memory comprising a substrate and a recording layer supported on the substrate. The recording layer is formed of a chemically stable dielectric material and an MSb alloy, M representing at least one element selected from the group consisting of Cu, Ag, Ge, Bi, Zn, Cd, Sn, Pb and As.

### BRIEF DESCRIPTION OF THE DRAWINGS

A more complete appreciation of the present invention and many of the attendant advantages thereof will be readily obtained as the invention becomes better understood by reference to the following detailed description when considered in connection with the accompanying drawings, wherein:

Figures 1, 2 and 3 each provide a sectional view of different optical memories according to the present invention.

Figure 4 is a schematic diagram depicting a co-evaporation system for use in preparing an optical memory of the present invention.

Figure 5 is a schematic diagram of an optical memory system within the present invention.

Figure 6 is a graph showing the relationship between the ratio of reflectivity and the content of Sb in the GeSb alloy of a recording layer of the present invention.

Figure 7 is a graph showing the relationship between the rate of reflectivity change and the thickness of recording layer of the present invention.

Figure 8 is a graph showing the relationship between the ratio of reflectivity of a recording layer of the present invention and exposure time.

## DETAILED DESCRIPTION OF THE PREFERRED EMBODIMENTS

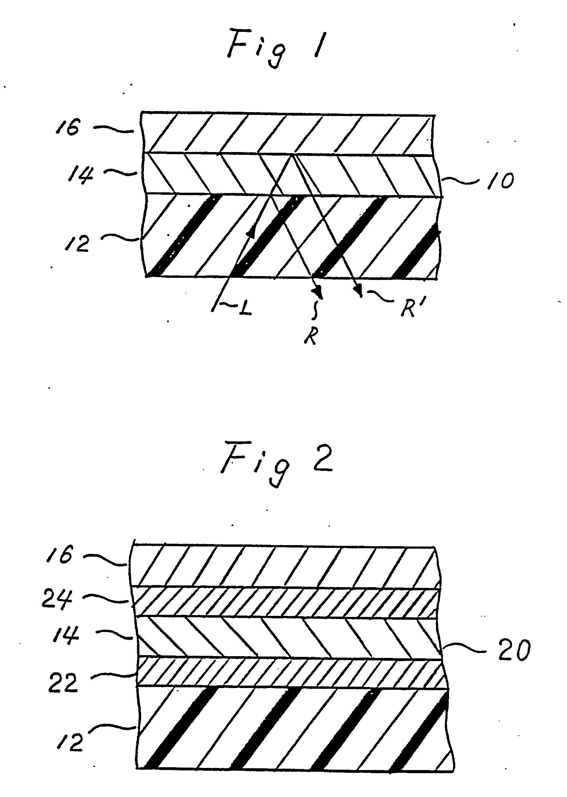

With reference to Figure 1, an optical memory is generally designated by 10. Optical memory 10 may be used as a computer memory medium, an image recording medium for an image information filing system, and the like. Optical memory 10 includes a transparent substrate 12, a recording layer 14, and a surface layer 16.

Substrate 12 is formed from acrylic or polycarbonate resins. Recording layer 14 is formed from an MSb alloy, where M is at least one element selected from the group consisting of Cu, Ag, Ge, Bi, Zn, Cd, Sn, Pb and As. Surface layer 16 is formed on recording layer 14 and is of a material having a high adhesion strength with recording layer 14. Surface layer 16 may be formed by applying an ultraviolet ( UV ) curing resin on recording layer 14 and subsequently curing the resin with ultraviolet rays. Surface layer 16 prevents damage such as scratches to recording layer 14 during the handling of optical memory 10.

The MSb alloys of recording layer 14 have relatively low melting points which are in the range of about $300^\circ C$ to $700^\circ C$ and crystallization temperatures which are greater than about $100^\circ C$. In addition, materials such as Cu, Ag, Ge, Bi, Zn, $Cd_7$ Sn, Pb and As have good anti-oxidization characteristics. These alloys have complex refractive indexes expressed as ( n-ik ), where n and k are real numbers. Generally, the refractive index of a transparent material, such as a glass plate, is defined by reference to a refraction angle. However, for a light absorbing material such as a metallic layer, the refractive index is expressed in terms of a complex number ( n-ik ), where n represents the difference between the speed of light in a vacuum and in the metallic layer and k represents the absorption of light by the metallic layer. As disclosed in Stuke, "Review of Optical and Electrical Properties of Amorphous Semiconductors," J. NON-CRYSTALLINE SOLIDS 4. pp. 1-26, and described in greater detail below, the complex refractive indexes, and thus the optical reflectivities, of these materials vary as a function of structural change within the recording layer.

In accordance with the present invention, a light beam is applied to selected regions of recording layer 14. For example, recording layer 14 may be locally irradiated by a laser beam L for a certain time period T, heating the MSb alloy of recording layer 14 to a temperature which is proportional to the energy density of beam L. After the exposure to laser beam L is terminated, the heated MSb alloy is cooled gradually at a cooling speed of t/2T. Although coherent light is used in this example, incoherent light may also be used as long as the beam intensity is sufficient to heat the MSb alloy and effect the structural transition described below.

According to the above expression, the MSb alloy in the irradiated portions of recording layer 14 is cooled quickly when it has been heated by irradiation with a high energy density beam for a short time. Conversely, the alloy is cooled slowly when it has been heated by an irradiating beam of a lower energy density for a longer time. The MSb alloy assumes a non-equilibrium phase structure, such as an amorphous or metastable crystalline phase structure, when it has been heated by irradiation with a high energy density beam for a short time and cooled quickly. Conversely, the alloy assumes an equilibrium phase structure, such as a crystalline or a stable crystalline phase structure, when it has been heated by irradiation with a lower energy density beam for a longer time and cooled slowly. In short, recording layer 14 undergoes a temperature-dependent structural change, governed by the selection of the scanning speed and the energy density of laser beam L. The layer passes between an equilibrium phase structure and a non-equilibrium phase structure, each phase having a different complex refractive index. The reflectivity characterized by the complex refractive index of the irradiated portions in recording layer 14 may thus be altered and information thereby recorded ( or erased ) as localized changes in the optical reflectivity of recording layer 14.

In the present invention, a particularly preferred thickness of recording layer 14 is less than about one-half of the wavelength of the applied laser beam L, so that the intensity of light reflected from recording layer 14 is enhanced by constructive interference between reflected rays R and R' shown in Figure 1. By virtue of this interference effect, recording layer 14 maintains a high reflectivity after the recording and erasing of information, and thus focusing, tracking and information signals are obtained with a high signal-to-noise (SN) ratio.

The MSb alloys of recording layer 14 have relatively low melting points and high crystallization temperatures, as described above. Recording layer 14, therefore, assumes a non-equilibrium phase structure, such as an amorphous phase or metastable crystalline structure, very easily when heated and cooled rapidly. The non-equilibrium phase structure of recording layer 14 maintains its stability at room temperature. In addition, recording layer 14 is chemically stable. A recording layer 14 comprised of an MSb alloy has, therefore, characteristics appropriate for an erasable optical memory.

The content of Sb in the MSb alloy is in a range of about 25 to 75 atomic in order to obtain a high signal-to-noise ( SN ) ratio. The $M_{100-x}Sb_x$ alloy ( where x is the composition ratio, x being in a range of about 25 to 75 atomic % ) exhibits a large change in reflectivity between its equilibrium phase structure and its non-equilibrium phase structure due to the segregation of Sb.

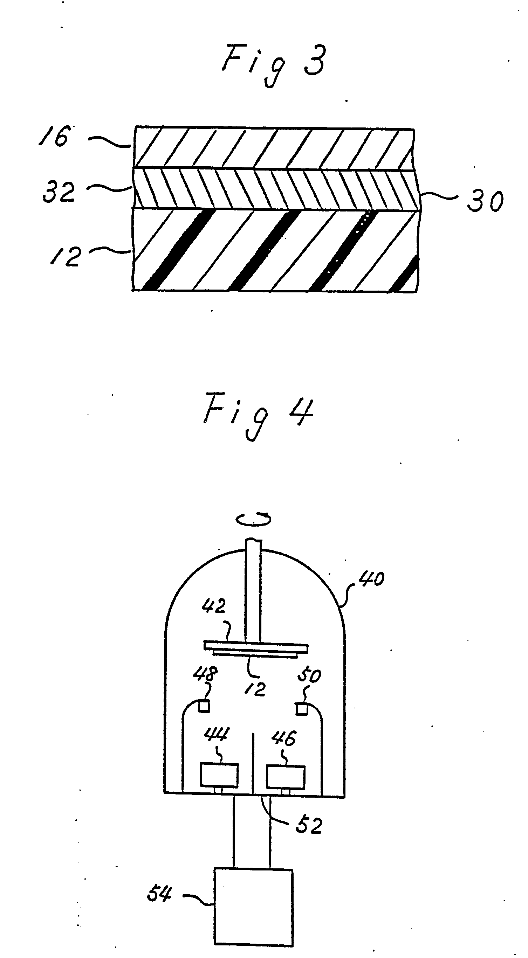

In another embodiment of the present invention, shown in Figure 2, an optical memory 20 includes a transparent substrate 12, a first protective layer 22, a recording layer 14, a second protective layer 24 and a surface layer 16. First protective layer 22 is formed between substrate 12 and recording layer 14 while second protective layer 24 is formed between recording layer 14 and surface layer 16. First and second protective layers 22 and 24 are formed from $SO_2$, SiO, Al and the like. The thickness of first and second protective layers 22 and 24 is preferably in a range of 100 A to 5000 A.

First and second protective layers 22 and 24, formed from $SiO_2$, SiO or Al have low rates of heat diffusion. Therefore, each of the protective layers 22 and 24 has a very large adiabatic capacity, i.e., a very good ability to suppress heat radiation. Thus, first and second protective layers 22 and 24 prevent the diffusion of heat to recording layer 14 and the formation of holes therein due to the application of a laser beam. In addition, protective layers 22 and 24 thermally insulate recording layer 14 and restrict heat radiation therefrom. This helps recording layer 14 gradually cool and solidify after melting.

In another embodiment of the present invention, shown in Figure 3, an optical memory 30 includes a transparent substrate 12, a surface layer 16, as described above, and a recording layer 32. Recording layer 32 comprises a chemically stable dielectric and the MSb alloy ( where M is at least one element selected from the group consisting of Cu, Ag, Bi, Zn, Cd, Sn, Pb and As ). The chemically stable dielectric is a dielectric material that is effectively non-reactive with the aforementioned MSb alloy and does not interfere with any light-modulated phase transitions within the MSb alloy. Dielectric materials suitable for the present invention must have sufficient chemical stability to prevent the MSb alloy from evaporating and corroding. Oxides such as $B_2O_3$, $SB_2O_3$, PbO, $SiO_2$ and $Ta_2O_5$, fluorides such as $BiF_3$, LIF, $PbF_2$, $MgF_2$, $BaF_2$, and $CaF_2$, and sulfides such as PbS, ZnS, and $Sb_2S_3$ are suitable for the dielectric material of the present invention.

In optical memory 30, the MSb alloy is stabilized within recording layer 32, and recording layer 32 has excellent durability and corrosion resistance. The fractional volume of the MSb alloy in the alloy-dielectric mixture of the present embodiment is preferably more than 40 % and more specifically is in the range of about 40 to 90 %, which results in sufficient reflectivity, durability, mechanical strength and thermal conductivity.

Methods such as vacuum deposition, sputtering, and the like may be used to prepare optical memories 10, 20 and 30. For example, optical memory 10 may be prepared using the co-evaporating apparatus shown in Figure 4. A deposition chamber 40 contains a substrate 12 supported by a support member 42 which is rotated by a motor ( not shown ). Deposition chamber 40 also includes an evaporation source 44 for evaporating an M element, an evaporation source 46 for evaporating Sb, and thickness monitors 48 and 50. Evaporation sources 44 and 46 are disposed below support member 42 and are coupled to a DC power source ( not shown ). Monitors 48 and 50 are disposed above evaporation sources 44 and 46 and monitor the amount of the element evaporated from evaporation sources 44 and 46, respectively. On the basis of values determined by monitors 48 and 50, evaporation sources 44 and 46 are charged and controlled by the DC power source. In addition, deposition chamber 40 is provided with a gas exhaust port 52 on the bottom wall thereof. Gas exhaust port 52 is connected to a vacuum pump 54 so that deposition chamber 40 may be evacuated.

In the co-evaporating apparatus, a cleaned substrate 12 is fixed to support member 42 which is rotated by the motor. Vacuum pump 54 is operated so as to evacuate the inside of deposition chamber 40 to about $10^{-6}$ Torr. Evaporation sources 44 and 46 then evaporate the materials at a predetermined temperature, whereby the evaporated materials are deposited. The DC power source controls the thickness of the deposited materials and the proportion of mixed materials. In the present invention, all the evaporated materials ( Cu, Ag, Ge, Bi, Zn, Cd, Pb, As and Sb) have anti-oxidation characteristics. Therefore, it is very easy to control the thickness of the deposited materials and the proportion of mixed materials.

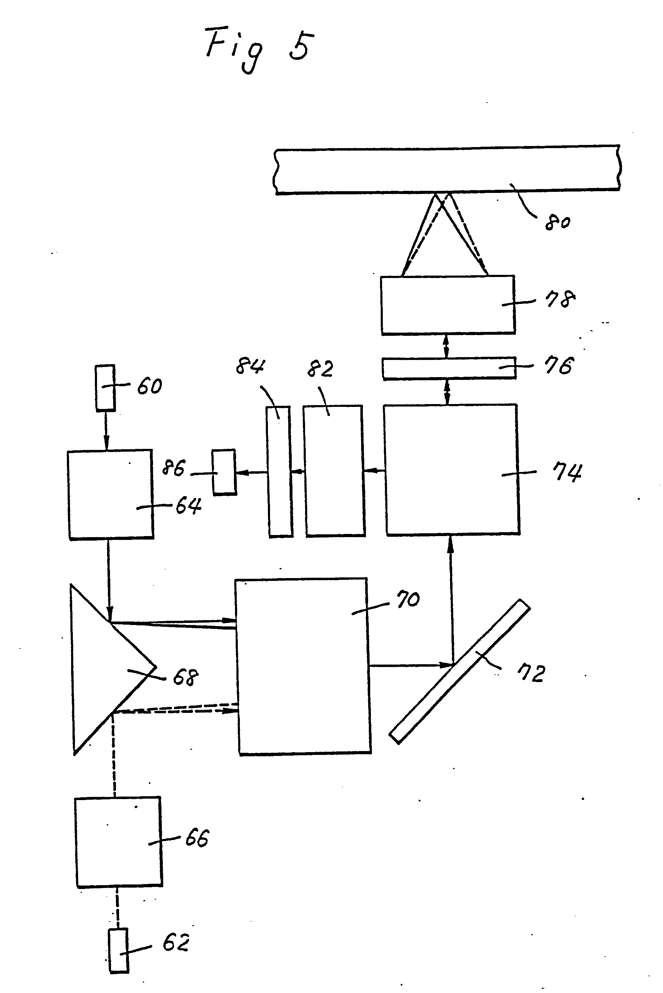

The optical memory described in the foregoing examples is used as an image recording memory for an image information filing apparatus as shown in Figure 5. The apparatus includes a semiconductor laser diode 60 for recording and reading information and a semiconductor laser diode 62 for erasing information recorded on the memory. The laser beam emitted from diode 60 or 62 is focused by lens 64 or 66, respectively, and reflected by a mirror 68. The light reflected from mirror 68 enters a lens 70 parallel to the optical axis and is then reflected by a mirror 72. The reflected laser beam from mirror 72 is introduced to a beam splitter 74 and then to a polarizing plate 76 having a thickness about one-quarter of the wavelength of the applied laser beam. The laser beam then enters a lens 78 and is focused on optical memory 80. Lens 78 is movably supported by a driving mechanism ( not shown ) which radially and axially adjusts its position. Optical memory 80 is rotated at a velocity of 10 m/s.

The light reflected from optical memory 80 enters lens 78 and then plate 76. A this point, the light is polarized because it has moved back and forth within plate 76. The light is reflected by beam splitter 74 to a converging lens 82 and column lens 84. The reflected light from optical memory 80 is detected by a detector 86. Lens 78 is positioned by the driving mechanism so that it focuses on optical memory 80.

In the recording operation, laser diode 60 emits a pulsed light ( recording beam ) containing information, so that the portions of the recording layer irradiated by the recording beam are melted. The recording layer is then cooled quickly, such that the irradiated portions of the recording layer pass to a non-equilibrium phase structure. In a reading operation, laser diode 60 continuously emits a laser beam having one-tenth the power of the recording operation. The emitted light passes through the substrate and is reflected by the recording layer. The intensity of the reflected light changes according to the reflectivity of the recorded portion, the recorded portion having assumed a non-equilibrium phase structure. Thus, the recorded information is regenerated as a change of reflectivity. In the erasing operation, laser diode 62 continuously emits an erasing beam to which optical memory 80 is exposed, whereby the structure of the recording layer is switched to an equilibrium phase structure with the consequence that the recorded information is erased.

Example 1

In accordance with the procedure described below, an optical memory of the present invention was prepared using the apparatus shown in Figure 4.

A substrate comprising polycarbonate resins was provided in the form of a disc having a diameter of about 130 mm and a thickness of about 1.2 mm. The substrate was cleaned and fixed to support member 42. The substrate was then rotated at about 50 rpm and evaporation sources 44 and 46 were turned on. A high vacuum of about $10^{-6}$ Torr was maintained inside deposition chamber 40. Evaporation source 44 evaporated Ge and evaporation source 46 evaporated Sb. Thus, a recording layer comprising GeSb was formed by the simultaneous evaporation Ge and Sb onto the substrate, and the thickness of the recording layer was adjusted to about 500 A. The disc was covered with a surface layer made of UV-cured resin, so that it had the multi-layered structure shown in Figure 1.

The recording layer was deposited in a non-equilibrium ( amorphous ) phase and subsequently initialized to an equilibrium phase by light irradiation. In the GeSb film, irradiation with a strong, short light pulse ( 13mW, $0.5 \times 10^{-6}$ s ) transformed the film to the non-equilibrium phase. Irradiation with a weak, long light pulse ( 6mW, $3 \times 10^{-6}$ s ) returned the film to its initial equilibrium phase.

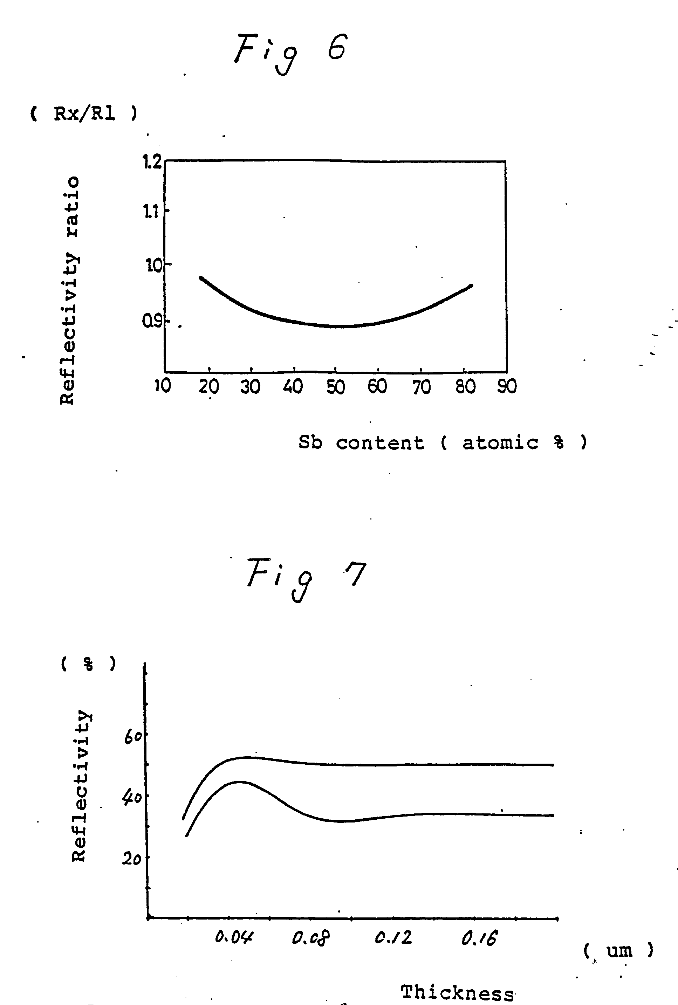

As shown in Figure 6, the optical memory exhibited a ratio of reflectivity ( Rx/Ri ) dependant on the content of Sb in the GeSb alloy. Rx was the reflectivity of the recording layer in its non-equilibrium phase, and Ri was the reflectivity of the recording layer in its equilibrium phase. The ratio Rx/Ri was smallest when the Sb in the GeSb alloy was about 50 atomic %. Namely, the $Ge_{50} Sb_{50}$ alloy displayed the greatest difference between the reflectivity of the equilibrium phase structure and that of the non-equilibrium phase structure. A $Ge_{100-x} Sb_x$ alloy, where x was the composition ratio in the range of about 25 to 75 atomic %, displayed a reflectivity change of 5% or more. Therefore, the recording layer comprising the $Ge_{100-x} Sb_x$ alloy had a high level of read-out signals.

Example 2

An optical memory was prepared as described in Example 1, except that evaporation source 44 evaporated Cu, Ag, Bi, Zn, Cd, Sn, Pb or As. As a result, a recording layer comprising CuSb, AgSb, BiSb, ZnSb, CdSb, SnSb, PbSb or AsSb was formed on the substrate.

The ratio of reflectivities ( Rx/Ri ) of these recording layers were substantially the same as that of the recording layer comprising GeSb. Therefore, an optical memory comprising a recording layer of a $M_{100-x} Sb_x$ alloy, where M was an element selected from the group consisting of Cu, Ag, Bi, Zn, Cd, Sn, Pb and As and x was the composition ratio in the range of about 25 to 75 atomic %, also provided high level read-out signals.

Example 3

An optical memory was prepared as in Example 1, using the apparatus illustrated in Figure 4. More specifically, a polycarbonate, disc-shaped substrate having a thickness of about 1.2 mm and a diameter of about 130 mm was cleaned and fixed to support member 42. Evaporation sources 44 and 46 evaporated Ge and Sb, respectively. Thus, recording layers comprising GeSb were deposited on the substrates, the content of Sb in the GeSb being adjusted to about 30, 50 and 70 atomic % by monitors 48 and 50 and the power source. The thicknesses of the recording layers were adjusted to about 500 A. These discs were covered with surface layers of a UV-cured resin so they each had multi-layered structures as shown in Figure 1. The recording layers were deposited with an amorphous phase structure and were subsequently initialized to an equilibrium phase structure by light irradiation.

The resulting optical memories were rotated at about 1000 rpm and were exposed to a laser ( recording ) beam having a wavelength of 8300 A, a diameter of $1.5 \times 10^{-6}$m and a $0.5 \times 10^{-6}$s pulse of about 13mW in power. As a result, the recording layers changed phase from equilibrium to non-equilibrium. Information signals were obtained with a high SN ratio of about 42 to 45 dB ( at 1MHz).

The optical memories were also exposed to a laser beam ( erasing beam ) having a $3 \times 10^{-6}$s pulse of about 6mW. As a result, the recording layers changed phase from non-equilibrium to equilibrium. The information recorded in the recording layers was erased from the recording layers.

Moreover, additional optical memories were prepared as described above with evaporation source 44 evaporating Cu, Ag, Bi, Zn, Cd, Sn, Pb and As. As a result, recording layers of MSb, M being an element selected from the group consisting of Cu, Ag, Bi, Zn, Cd, Sn, Pb and As, the content of Sb in MSb being adjusted to about 30, 50 and 70 atomic %, were deposited on the substrates. In the resulting optical memories, information signals were also obtained with high S/N ratios of about 38 dB or more ( at 1MHz ).

Finally, optical memories were prepared as described above with evaporation source 44 evaporating Se, Te or Ga. As a result recording layers of SeSb, TeSb or GaSb, were deposited on the substrates. In the resulting optical memories, however, information signals were obtained with low S/N ratios of about 35 dB or less.

### Example 4

An optical memory of the present invention comprising a recording layer which included GeSb

and $Bi_2O_3$ was prepared using the apparatus shown in Figure 4.

A polycarbonate, disc-shaped substrate having a thickness of about 1.2 mm and a diameter of about 130 mm was cleaned and fixed to support member 42. The substrate was then rotated and evaporation sources 44 and 46 were operated while the inside of deposition chamber 40 was kept at a high vacuum. Evaporation sources 44 and 46 evaporated GeSb and $Bi_2O_3$, respectively. Thus, a recording layer comprising a mixture of GeSb and $Bi_2O_3$ was deposited on the substrate such that the fractional volume of GeSb in the recording layer was adjusted to about 60 % by monitors 48 and 50 and the power source. The disc was covered with a surface layer made of UV-cured resin, so that it had a multi-layered structure as shown in Figure 3.

As shown in Figure 7, when the recording layer was exposed to a laser beam with wavelength of 8300 A and the phase of the recording layer was thus irreversibly switched from an equilibrium phase to a non-equilibrium phase, or vice versa, the observed reflectivity change depended on the thickness of the recording layer. The results illustrated in Figure 7 indicate that the thickness of the recording layer should be about 900 A, i,e., in the range where the disc reflectivity and reflectivity rate of change underwent significant alternation in response to exposure depending on the above-mentioned optical interference effect. Strong read-out signals were thus obtainable.

### Example 5

An optical memory was prepared as described in Example 4. The thickness of the recording layer was adjusted to 900 A.

First the resulting optical memory was rotated at about 1000 rpm and was exposed to a laser ( erasing ) beam of 6mW for one revolution in order to initialize the recording layer. Secondly the optical memory was exposed to a laser ( recording ) beam for a $0.3 \times 10^{-6}$s pulse of about 13mW. The information signals were thus recorded on the optical memory.

The optical memory was then irradiated by the laser ( erasing ) beam for a $8 \times 10^{-6}$s pulse of about 6mW and the stored information signals were completely erased. Such a recording and erasing operation was repeatedly cyclically more than $10^3$ times. No deterioration of the recording layer, SIN ratio of information signals or the ratio of reflectivity ( Rx/Ri ) described in Example 1 was caused by the repetition. Under appropriate recording and erasing conditions, more than $10^5$ reversible cycles were attained.

## Example 6

An optical memory was prepared as described in Example 1.

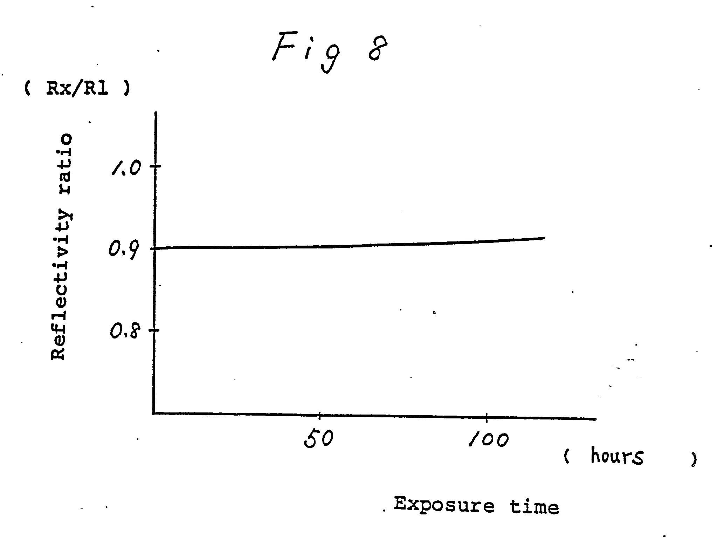

To test durability, the recording film of the optical memory thus obtained was exposed to high temperature and humidity condition. The ratio of reflectivity ( Rx/Ri ) of the GeSb film under the accelerated aging test in an atmosphere of about 70°C and about 85% RH is shown in Figure 8. Except for a slight initial increase, no change was observed in 100 hours of testing.

## Example 7

In accordance with the procedure described below, an optical memory of the present invention was prepared using an evaporating apparatus having three evaporation sources ( not shown ).

A substrate comprising polycarbonate resins was provided in the form of a disc having a diameter of about 130 mm and a thickness of about 1.2 mm. The substrate was cleaned and fixed to a support member of the evaporating apparatus. The substrate was then rotated at about 50 rpm and the three evaporation sources were turned on. A high vacuum of about $10^{-6}$ Torr was maintained inside the deposition chamber of the evaporating apparatus. The evaporation sources evaporated Zn, Bi and Sb, respectively. Thus, recording layers comprising ( ZnBi )$_{50}$ Sb$_{50}$ were deposited on the substrates. The content of Zn in ZnBi was adjusted to about 0, 20, 50 and 70 atomic % by monitors and the power source of the evaporating apparatus. The thickness of the recording layers was adjusted to about 700 A. The discs were covered with surface layers made of UV-cured resin, so that they had multi-layered structures as shown in Figure 1. The recording layers were deposited with an amorphous phase structure and subsequently initialized to an equilibrium phase structure by light irradiation.

The resulting optical memories were rotated at about 1200 rpm and were exposed to a recording laser beam having a wavelength of 8300 A, a diameter of $1.5 \times 10^{-6}$ m and a $0.2 \times 10^{-6}$ s pulse of about 15mW.

The signal to noise ratio of the optical memories comprising the ( BiZn )$_{50}$ Sb$_{50}$ alloy were fairly good ( about 42 dB or more ) and, except for a slight increase, no dramatic changes were observed in the signal to noise ratio as the content of Zn in ( ZnBi )$_{50}$ Sb$_{50}$ alloy was varied. The optical memories produced had a high level of read-out signals.

In addition, optical memories were prepared as described above, except that a plurality of evaporation sources evaporating an element selected from the group consisting of Cu, Ag, Ge, Bi, Zn, Cd, Sn, Pb and As was used. As a result, the recording layers comprised MSb, where M was at least two elements selected from the group consisting of Cu, Ag, Bi, Zn, Cd, Sn, Pb, or As. In the resulting optical memories, the signal to noise ratio were also fairly good ( about 40.dB or more).

It should be understood that the detailed description and examples, while indicating presently preferred embodiments of this invention, are given by way of illustration only. Various modifications and changes may be made within the scope of the present invention, which is to be limited only by the appended claims.

**Claims**

1. An optical memory device comprising:
   (a) a substrate; and
   (b) a recording layer supported on said substrate, said recording layer containing an MSb alloy, where M comprises at least one of the elements Cu, Ag, Ge, Bi, Zn, Cd, Sn, Pb and As.

2. An optical memory according to claim 1, wherein the content of Sb in said Msb is in the range of about 25 to about 75 atomic wt%.

3. An optical memory according to claim 1 or claim 2 wherein said recording layer undergoes a phase transition between an equilibrium phase structure and a non-equilibrium phase structure when exposed to light.

4. An optical memory according to any preceding claim wherein the thickness of said recording layer corresponds to less than about one half of the wavelength of a light beam which can be produced by a laser.

5. An optical memory according to any preceding claim further comprising a surface layer formed on said recording layer.

6. An optical memory according to any preceding claim, further comprising a first protective layer formed between said substrate and said recording layer and a second protective layer formed between said recording layer and said surface layer.

7. An optical memory according to any preceding claim wherein said recording layer also contains a chemically stable dielectric material.

8. An optical memory according to claim 7, wherein said dielectric material comprises an oxide.

9. An optical memory according to claim 7, wherein said dielectric material comprises a fluoride.

10. An optical memory according to claim 7, wherein said dielectric material comprises a sulphide.

11. An optical memory according to claim 7, wherein the fractional volume of said MSb alloy is in the range of about 40 to about 90%.

## Fig 1

16 — 14 — 12 — 10

L R R'

## Fig 2

16 — 24 — 14 — 22 — 12 — 20

## Fig 3

16
32
30
12

## Fig 4

40
42
48
50
12
44
46
52
54

Fig 5

## Fig 6

( Rx/Rl )

Reflectivity ratio

1.2
1.1
1.0
0.9

10  20  30  40  50  60  70  80  90

Sb content ( atomic % )

## Fig 7

( % )

Reflectivity

60

40

20

0.04   0.08   0.12   0.16   ( um )

Thickness

⊗

# Fig 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 9, no. 253 (P-395)[1976], 11th October 1985; & JP-A-60 103 534 (ASAHI KASEI KOGYO K.K.) 07-06-1985 * Abstract * | 1,5,6 | G 11 B   7/24 |
| X | PATENT ABSTRACTS OF JAPAN, vol. 11, no. 13 (C-397)[2460], 14th January 1987; & JP-A-61 190 032 (HITACHI LTD) 23-08-1986 * Abstract * | 1-3 | |
| X | PATENT ABSTRACTS OF JAPAN, vol. 11, no. 131 (M-584)[2578], 24th April 1987; & JP-A-61 272 190 (DAINIPPON INK & CHEM INC) 02-12-1986 * Abstract * | 1,5 | |
| X | PATENT ABSTRACTS OF JAPAN, vol. 6, no. 241 (P-158)[1119], 30th November 1982; & JP-A-57 141 034 (ASAHI KASEI KOGYO K.K.) 01-09-1982 * Abstract * | 1,5 | TECHNICAL FIELDS SEARCHED (Int. Cl.4) |
| A | IDEM | 9 | G 11 B |
| X | EP-A-0 184 452  (FUJITSU) * Abstract; claims 1-3,34,41,42; page 20, line 24 - page 21, line 8; figures 8,9 * | 1-3,5,6 | |
| X | US-A-4 500 889  (M. WADA) * Abstract; claims * | 1,8,10,11 | |

The present search report has been drawn up for all claims

| Place of search | Date of completion of the search | Examiner |
|---|---|---|
| THE HAGUE | 06-09-1988 | VANHECKE H. |